# EUROPÄISCHE PATENTSCHRIFT

(11) **EP 0 732 264 B1**
(45) Veröffentlichungstag und Bekanntmachung des Hinweises auf die Patenterteilung: **12.05.1999**
(21) Anmeldenummer: 96810148.5
(22) Anmeldetag: 11.03.1996
(51) Int. Cl.: B64F 1/315

(54) **Höhenanpassbare Passagiertreppe**
Steps for passengers adjustable in height
Escalier pour passagers réglable en hauteur

(30) Priorität: 13.03.1995 CH 714/95
(43) Veröffentlichungstag der Anmeldung: 18.09.1996
(73) Patentinhaber: Josef Meyer Waggon AG, 4310 Rheinfelden (CH)
(72) Erfinder: Stark, Karl-Heinz, CH-4204 Himmelried (CH)
(74) Vertreter: Feldmann, Clarence Paul

(56) Entgegenhaltungen:
- DE-U- 8 815 042
- DE-U- 8 815 054
- GB-A- 1 271 941
- US-A- 3 664 456

## Beschreibung

Die vorliegende Erfindung betrifft eine für unterschiedliche Flugzeugtypen höhenanpassbare Passagiertreppe, die mit einem Fahrwerk und einem darauf befestigtem stationären Treppenteil mit Seitenwangen und darin fest angeordneten Treppenstufen und einer beweglichen Zwischenplattform, sowie einem teleskopisch ausfahrbaren Treppenteil, dessen jeweils auf die Zwischenplattform ausgerichtete Treppenstufe mit dieser fluchtet, versehen ist.

Der stationäre Treppenteil ist fest auf einem Fahrwerk angeordnet und mit entsprechender Hydraulik versehen, um den Neigungswinkel der Treppe geringfügig verändern zu können und damit eine Feinanpassung der Uebergangsplattform der Passagiertreppe an die Flugzeugeinstiegsöffnung vornehmen zu können. Die Treppenneigung lässt sich so zwischen 30 und 40° verändern. Die eigentliche Höhenanpassung der Passagiertreppe erfolgt jedoch durch das Ausfahren des teleskopischen Treppenteiles. Das obere Ende des ausfahrbaren Treppenteiles trägt die Uebergangsplattform, welche mit der Flugzeugausstiegsöffnung auf gleiches Niveau gebracht werden soll. Die Höhe über Boden der Uebergangsplattform kann je nach Flugzeugtyp zwischen zwei und sechs Meter betragen. Die oberste Stufe des stationären Treppenteiles ist etwa doppelt so tief wie die Trittfläche einer normalen Stufe und bildet so die sogenannte Zwischenplattform. Der teleskopisch ausfahrbare Treppenteil wird immer so ausgefahren, dass in der gewünschten Endhöhe eine Treppenstufe des teleskopisch ausfahrbaren Treppenteiles mit der Zwischenplattform genau fluchtet. Die Zwischenplattform bildet somit immer den Uebergang der beiden Treppenteile.

Zwischen der Zwischenplattform und der mit dieser fluchtenden Stufe des ausfahrbaren Treppenteiles bildet sich zwangsläufig immer ein Spalt. Dieser Spalt stellt für die Passagiere eine gewisse Gefahr dar. Dies ist erkannt und entsprechende Vorschriften wurden erlassen, die vorschreiben, dass die Spaltbreite 8 mm nicht überschreiten dürfte. Diese maximal zulässige Spaltbreite lässt sich mit den heute bekannten Konstruktionen jedoch meist nicht einhalten. Die hat einerseits mit den Bautoleranzen zu tun, die ein sicheres Aneinandervorbeigleiten der beiden Treppenteile gewährleisten müssen und zum anderen führen die unterschiedlichen Durchbiegungen des Treppenoberteiles unter Belastung zu entsprechenden Mindesttoleranzen, die dazu führen, dass die maximal zulässigen 8 mm der Spaltbreite nicht eingehalten werden können. Eine bekannte Konstruktion einer Passagiertreppe sieht vor, dass jede einzelne Stufe des teleskopisch ausschiebbaren Treppenteiles in der entsprechenden Endstellung justiert und verschraubt werden muss. Diese Lösung ist sehr arbeitsaufwendig und trotzdem ungenau, da nur ein bestimmter Belastungszustand berücksichtigt werden kann. Entsprechend wird man eine solche Passagiertreppe nach Möglichkeit immer für denselben Flugzeugtyp einsetzen. Hiermit verliert aber diese Passagiertreppe ihre polyvalente Anwendung.

Eine zweite, bekannte Lösung sieht vor, dass die Zwischenplattform am stationären Treppenteil hochklappbar ausgebildet ist. Das Hochklappen der Zwischenplattform erfolgt entweder mit Kraftunterstützung, beispielsweise mittels einem Hydraulikzylinder, oder durch eine Kulissenführung am teleskopisch ausfahrbaren Treppenteil. Die kraftunterstützte Lösung mittels Hydraulikzylinder ist sehr aufwendig, weil deren Bewegung überwacht und gesteuert werden muss, um ein zu frühes oder zu spätes Absenken der Zwischenplattform zu verhindern. Aber auch die Kulissensteuerung zur Bewegung der Zwischenplattform ist teuer, da die Kulisse über die ganze Länge des teleskopisch ausfahrbaren Treppenteiles angebracht werden muss. Dies Kulisse neigt zudem noch zum Verklemmen, da die Hubstrecke der Kulisse sehr steil ausgeführt werden muss. Versucht man, das Verklemmen durch Erhöhung der Toleranzen zu meiden, so ergibt sich wiederum das Problem, dass die zulässige Spaltbreite von 8 mm im Bereich der Zwischenplattform überschritten wird.

Es ist folglich die Aufgabe der vorliegenden Erfindung, eine höhenanpassbare Passagiertreppe für unterschiedliche Flugzeugtypen, mit den Merkmalen gemäss dem Oberbegriff des Patentanspruches 1 zu schaffen, bei der die maximal zulässige Spaltbreite an der Zwischenplattform erreicht werden kann, ohne dabei die Nachteile der bekannten Lösungen in Kauf nehmen zu müssen.

Diese Aufgabe löst eine höhenanpassbare Passagiertreppe mit den Merkmalen des Patentanspruches 1. Weitere vorteilhafte Ausgestaltungsformen des Erfindungsgegenstandes gehen aus den abhängigen Ansprüchen hervor und deren Zweck und Wirkungsweise ist an Hand der nachfolgenden Beschreibung ersichtlich.

Die vorliegende Erfindung ist an Hand der Zeichnung in der nachfolgenden Beschreibung erläutert. Es zeigt:
- Figur 1 -: eine schematische Darstellung einer höhenanpassbaren Passagiertreppe in der Gesamtansicht;
- Figur 2 -: eine vergrösserte und vereinfachte Darstellung des Teilbereiches der Passagiertreppe im Bereich der Zwischenplattform in der Benutzungslage und
- Figur 3 -: dieselbe Ansicht der Zwischenplattform in einer Zwischenlage vor der endgültigen Höhenanpassung.

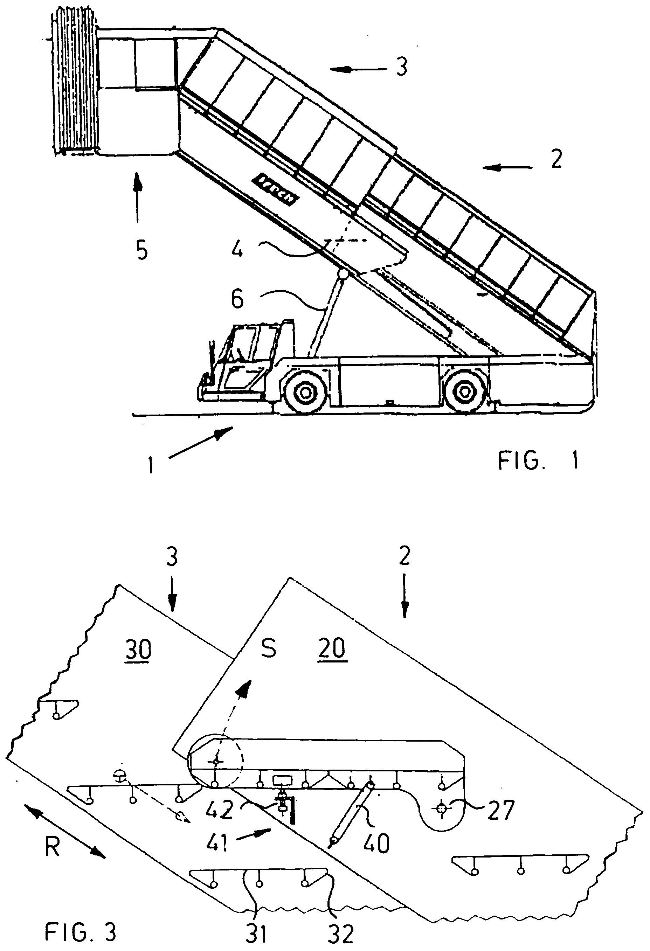

Zum besseren Verständnis ist in der Figur 1 eine Ausführungsform einer Passagiertreppe der erfindungsgemässen Bauart in der Gesamtansicht dargestellt. Die eigentliche Treppe ist auf einem Fahrwerk 1 angeordnet. Hierbei kann es sich, wie im dargestellten Beispiel, um ein selbstfahrendes, motorisiertes Fahrzeug handeln oder um ein nichtmotorisiertes Fahrwerk, welches an einem Zugfahrzeug angehängt werden kann. Die eigentliche Treppe ist teleskopisch ausgestaltet. Dabei liegt der unter, stationäre Treppenteil 2 direkt auf dem Fahrwerk 1 auf. Der zweite, teleskopisch ausfahrbare Treppenteil 3 ist etwas breiter gestaltet als der untere, stationäre Treppenteil und umgreift somit im eingefahrenen Zustand den schmäleren, stationären Treppenteil 2. Der teleskopisch ausfahrbare Treppenteil 3 weist am oberen Ende eine Uebergangsplattform 5 auf, welche zum Ein- und Aussteigen der Passagiere aus einem Flugzeug auf das Niveau der Flugzeugausstiegstüre gebracht werden soll. In jedem Benutzungszustand bildet die oberste Treppenstufe des stationären Treppenteiles 2 und die damit fluchtende Treppenstufe des teleskopisch ausfahrbaren Treppenteils 3 eine Plattform 4. Die oberste Treppenstufe des stationären Treppenteils 2 ist verbreitert gestaltet und wird als sogenannte Zwischenplattform bezeichnet. Weil in der vorliegenden Erfindung die obere, sogenannte Uebergangsplattform 5 keine Rolle spielt, soll sich der Ausdruck Plattform immer auf die Zwischenplattform 4 beziehen, wenn nicht ausdrücklich auf die Uebergangsplattform verweisen wird. Die gesamte Treppe 2,3 lässt sich mit einer Hydraulikzylindereinheit 6 in der Neigung leicht variieren, womit eine exakte Höhenanpassung der Uebergangsplattform 5 an die Ausstiegsöffnung des Flugzeuges erreicht werden kann. Im voll eingezogenen Zustand des teleskopisch ausfahrbaren Treppenteiles 3 lässt sich die Treppe auf ein unteres Niveau absenken, so dass die Uebergangsplattform 5 annähernd bis auf das Niveau der Fahrzeugkabine des Fahrwerkes 1 hinunter reicht.

Die grobe Höheneinstellung der Passagieertreppe erfolgt jeweils stufenweise. Hierzu wird jeweils der teleskopisch ausfahrbare Treppenteil 3 entsprechend ein- oder ausgefahren.

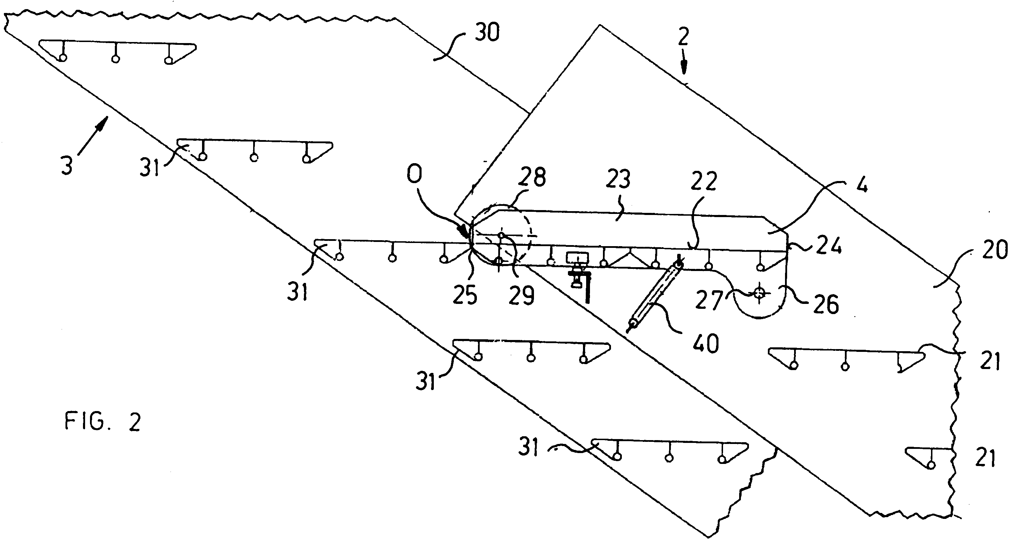

In der Figur 2 ist die erfindungsgemässe Passagiertreppe schematisch in einer Benutzungslage dargestellt. Hierbei ist der stationäre Treppenteil 2 in der Figur rechts und der teleskopisch ein- und ausfahrbare Treppenteil 3 links dargestellt. Sowohl der stationäre Treppenteil 2 als auch der teleskopisch ein- und ausfahrbare Treppenteil 3 weisen jeweils Seitenwangen 20 respektive 30 auf. Zwischen den Seitenwangen 20 beziehungsweise 30 sind feste Treppenstufen 21 beziehungsweise 31 angeordnet. Der teleskopisch ausfahrbare Treppenteil 3 weist lediglich feste Treppenstufen 31 auf. Mit Ausnahme der obersten Treppenstufe trifft dies auch auf alle anderen Treppenstufen 21 des stationären Treppenteils 2 zu.

Die oberste Treppenstufe des stationären Treppenteils 2 ist jedoch beweglich und in der Grösse flächenmässig etwa doppelt so gross wie eine normale festangeordnete Treppenstufe, da sie etwa die doppelte Tiefe aufweist. Diese oberste Treppenstufe wird als Zwischenplattform 4 bezeichnet. Diese Zwischenplattform 4 hat die Gestalt einer klappbaren Treppenstufe. Ihre Trittfläche 22 wird von seitlichen Versteifungswangen 23 beidseitig begrenzt. Diese Versteifungswangen 23 erstrecken sich sowohl über die Trittfläche 22 hinaus nach oben wie nach unten. Die Zwischenplattform 4 hat eine Vorderkante 24 und eine Hinterkante beziehungsweise rückwärtige Kante 25. Unterhalb der Trittfläche 22 im Bereich der Vorderkante 24 weisen die Versteifungswangen 23 lappenförmig nach unten ragende Verlängerungen 26 auf. Diese Verlängerungen 26 werden von einer Schwenkachse 27 durchsetzt. Dies erlaubt der Zwischenplattform 4 eine Schwenkbewegung um die Schwenkachse 27. Im Bereich der rückwärtigen Kante 25 sind aussen an den Versteifungswangen 23 beidseitig je eine Führungsrolle 28 mit einer Drehachse 29 angebracht. Die Drehachse 29 ist so angeordnet, dass die Führungsrolle 28 die rückwärtige Kante 25 der Trittfläche 22 geringfügig überragt. Die Führungsrollen 28 sollen die Hinterkante 25 der Trittfläche 22 um weniger als 8 mm überragen.

Mit Bezug auf die Figur 3 erkennt man nun, dass bei jeder Ein-oder Ausfahrbewegung des teleskopisch ausfahrbaren Treppenteils 3 die Vorderkanten 32 der festen Treppenstufen 31 des Treppenteils 3 von den Führungsrollen 28 überrollt werden. Hierbei wird die Zwischenplattform 4 um die Schwenkachse 27 in Pfeilrichtung S leicht nach oben geschwenkt. Diese Schwenkbewegung erfolgt ohne jegliche Steuerung und speziellen Antrieb absolut selbständig lediglich durch das Abrollen der Führungsrollen 28 über die Vorderkanten 32 der festen Treppenstufen 31. Lediglich eine Zugfeder 40 greift unterhalb der Trittfläche 22 an der Zwischenplattform 4 an. Damit die schwenkbare Zwischenplattform 4 nicht unter die Horizontale hinab nach unten schwenken kann, ist eine diese unterstützende, einstellbare Auflage 41 vorgesehen. Diese Auflage 41 ist mittels Stellschrauben 42 zusätzlich justierbar. Vorteilhafterweise bringt man die die rückwirkende Kraft erzeugende Zugfeder 40 so an, dass sie im Bereich zwischen der Schwenkachse 27 und der Auflage 41 an der Zwischenplattform 4 angreift.

Die beschriebene Lösung ist im Vergleich zu bekannten Lösungen desselben Problemes äusserst einfach und kostengünstig. In der Benützungslage entspricht nun der Spalt O zwischen der rückwärtigen Kante der Zwischenplattform 4 und der damit fluchtenden festen Treppenstufe 31 des teleskopisch ausfahrbaren Treppenteils 3 genau der Ueberragungsdistanz der Führungsrolle 28 über die rückwärtige Kante 25 der Zwischenplattform 4. Optimal wird man das Drehlager 29 der Führungsrollen 28 möglichst weit über der Trittfläche 22 in den Versteifungswangen 23 anbringen. Ebenso ist es vorteilhaft, wenn die Distanz des Schwenklagers 27 in den Verlängerungslappen 26 möglichst weit unterhalb der Trittfläche 22 angebracht ist.

Messungen haben ergeben, dass mit dieser Konstruktion das zulässige Mass für den Spalt O zwischen der rückwärtigen Kante der Zwischenplattform 4 und der Vorderkante der Treppenstufe 31 in der Grössenordnung zwischen 2 und 6 mm liegt. Damit wird das maximal zulässige Mass gemäss den geltenden Normen deutlich unterschritten.

## Patentansprüche

1. Höhenanpassbare Passagiertreppe für unterschiedliche Flugzeugtypen, mit einem Fahrwerk (1) und einem darauf befestigten stationären Treppenteil (2) mit Seitenwangen (20) und darin fest angeordneten Treppenstufen (21) und einer beweglichen Zwischenplattform (4), sowie einem teleskopisch ausfahrbaren Treppenteil (3), dessen jeweils auf die Zwischenplattform ausgerichtete Treppenstufe (31) mit dieser fluchtet, dadurch gekennzeichnet, dass die zwischenplattform (4) des stationären Treppenteiles (2) in den seitlichen Wangen, im Bereich (26, 27) der Plattformvorderkante (24), unterhalb der Trittfläche (22) der Zwischenplattform schwenkbar gelagert ist und das hintere frei bewegliche Ende der Zwischenplattform mit seitlichen, über der Trittfläche der Zwischenplattform gelagerten Führungsrollen (28) versehen ist, die die Hinterkante (25) der Zwischenplattform minimal überragen und den erwünschten Spalt (O) zwischen der Hinterkante (25) der Zwischenplattform und der Vorderkante der damit fluchtenden Treppenstufe (31) des teleskopisch ausfahrbaren Treppenteiles (3) definieren, und dass im Bereich zwischen der Vorderkante (24) und der Hinterkante (25) der Zwischenplattform mindestens eine diese unterstützende, einstellbare Auflage (41, 42) angebracht ist.

2. Passagiertreppe nach Anspruch 1, dadurch gekennzeichnet, dass im Bereich zwischen der Auflage (41, 42) und der Schwenkachse (27) an der Zwischenplattform eine Zugfeder (40) angreift.

3. Passagiertreppe nach Anspruch 1, dadurch gekennzeichnet, dass die Zwischenplattform (4) die Gestalt einer klappbaren Treppenstufe hat, die seitliche Versteifungswangen (23) aufweist, wobei die Wangen im Bereich der Vorderkante (24) lappenförmig nach unten verlängert sind und die Schwenkachse (27) im Bereich dieser Lappen (26) angeordnet ist.

4. Passagiertreppe nach Anspruch 3, dadurch gekennzeichnet, dass die Versteifungswangen (23) mindestens im Bereich der rückwärtigen Kante (25) über die Trittfläche (22) der Zwischenplattform nach oben hinausragen und die Lagerachse (29) der Führungsrollen in diesem Bereich angeordnet sind.

5. Passagiertreppe nach Anspruch 3, dadurch gekennzeichnet, dass die Versteifungswangen (23) über die gesamte Tiefe der Zwischenplattform (4) sich erstreckend über die Trittfläche (22) der Zwischenplattform nach oben vorstehend gestaltet sind.

## Claims

1. A height adaptable passenger stairs for various aircraft types, with a travelling mechanism (1) and with a stationary stairs part (2) fastened thereon, with lateral cheeks (20) and with stairs steps (21) rigidly arranged therein and with a movable intermediate platform (4) as well as with a telescopically extendable stairs part (3), whose stairs step (31), which in each case is directed to the intermediate platform, is flush with this, characterised in that the intermediate platform (14) of the stationary stairs part (2) in the lateral cheeks, in the region (26, 27) of the platform front edge (24), is pivotably mounted below the stepping surface (22) of the intermediate platform, and the lower freely movable end of the intermediate platform is provided with lateral guiding rollers (28) which are mounted over the stepping surface of the intermediate platform and which minimally project beyond the rear edge (25) of the intermediate platform and define the desired gap (0) between the rear edge (25) of the intermediate platform and the front edge of the stairs step (31) flush with this, of the telescopically extendable stairs part (3), and that in the region between the front edge (24) and the rear edge (25) of the intermediate platform there is attached at least one adjustable rest (41, 42) supporting this.

2. A passenger stairs according to claim 1, characterised in that in the region between the rest (41, 42) and the pivoting axis (27) on the intermediate platform there engages a tension spring (40).

3. A passenger stairs according to claim 1, characterised in that the intermediate platform (4) has the form of a foldable stairs step which comprises lateral stiffening cheeks (23), wherein the cheeks in the region of the front edge (24) are extended downwards in a tab-like manner and the pivoting axis (27) is arranged in the region of these tabs (26).

4. A passenger stairs according to claim 3, characterised in that the stiffening cheeks (23) at least in the region of the rearward edge (25) protrude upwards beyond the stepping surface (22) of the intermediate platform and the bearing axis (29) of the guide rollers is arranged in this region.

5. A passenger stairs according to claim 3, characterised in that the stiffening cheeks (23) over the whole depth of the intermediate platform (4) are formed projecting upwards extending over the stepping surface (22) of the intermediate platform.

## Revendications

1. Escalier pour passagers réglable en hauteur pour des types d'avions différents, comportant un dispositif de déplacement (1) et une partie formant escalier (2) qui y est fixée de façon stationnaire, avec des limons latéraux (20) et des marches d'escalier (21) qui y sont disposées fixement et une plate-forme intermédiaire (4) mobile, ainsi qu'une partie d'escalier (3) déplaçable de façon télescopique, dont la marche d'escalier (31) aboutissant à chaque fois à la plate-forme intermédiaire est alignée avec celle-ci, caractérisé en ce que la plate-forme intermédiaire (4) de la partie d'escalier stationnaire (2) est logée de façon pivotable dans les limons latéraux, dans la zone (26,27) du bord avant (24) de la plate-forme, au-dessous du plan de marche (22) de la plate-forme intermédiaire et l'extrémité arrière à mouvement libre de la plate-forme intermédiaire est munie de rouleaux de guidage (28) disposés au-dessus du plan de marche de la plate-forme intermédiaire, qui dépassent d'un minimum du bord arrière (25) de la plate-forme intermédiaire et définissent l'espace voulu (0) entre le bord arrière (25) de la plate-forme intermédiaire et le bord avant de la marche d'escalier (31) s'alignant avec lui, de la partie d'escalier (3) déplaçable de façon télescopique, et que dans la zone située entre le bord avant (24) et le bord arrière (25) de la plate-forme intermédiaire est disposée au moins une pièce d'appui supplémentaire ajustable (41,42).

2. Escalier pour passagers selon la revendication 1, caractérisé en ce que dans la zone située entre la pièce d'appui (41,42) et l'axe de pivotement ((27) un ressort de traction (40) agit sur la plate-forme intermédiaire.

3. Escalier pour passagers selon la revendication 1, caractérisé en ce que la plate-forme intermédiaire (4) a la forme d'une marche d'escalier repliable, qui présente des parois de renforcement latérales (23), tandis que les parois se prolongent vers le bas en forme d'oreille ou de patte dans la zone du bord avant (24) et l'axe de pivotement (27) se situe dans la zone de ces oreilles ou pattes.

4. Escalier pour passagers selon la revendication 3, caractérisé en ce que les parois de renforcement (23) font saillie, au moins dans la zone du bord arrière (25) au-dessus du plan de marche (22) de la plate-forme intermédiaire et les axes d'appui (29) des rouleaux de guidage sont placés dans cette zone.

5. Escalier pour passagers selon la revendication 3, caractérisé en ce que les parois de renforcement (23) font saillie vers le haut au-dessus de toute l'étendue de la plate-forme intermédiaire (4) en s'étendant au-dessus du plan de marche (22) de la plate-forme intermédiaire.
